# EUROPEAN PATENT SPECIFICATION

(11) **EP 4 209 396 B1**
(45) Date of publication and mention of the grant of the patent: **29.10.2025**
(21) Application number: 21864049.8
(22) Date of filing: 05.08.2021
(51) Int. Cl.: B60R 21/232

(54) **CURTAIN AIRBAG DEVICE**
VORHANGAIRBAGVORRICHTUNG
DISPOSITIF D'AIRBAG DE TYPE RIDEAU

(30) Priority: 02.09.2020 JP 2020147294
(43) Date of publication of application: 12.07.2023
(73) Proprietor: Autoliv Development AB, 44783 Vargarda (SE)
(72) Inventor: KATO, Tomoya, Yokohama-shi, Kanagawa 222-8580 (JP); MURAYAMA, Takashi, Yokohama-shi, Kanagawa 222-8580 (JP); HARA, Masanori, Yokohama-shi, Kanagawa 222-8580 (JP)
(74) Representative: Müller Verweyen
(86) International application number: PCT/JP2021/029105
(87) International publication number: WO 2022/049991

(56) References cited:
- WO-A1-2017/163550
- JP-A- 2004 114 842
- JP-A- 2007 290 700
- JP-A- 2008 260 426
- JP-A- 2013 249 025
- JP-A- 2014 004 878
- JP-A- 2015 085 726
- JP-A- 2018 034 752
- JP-A- 2019 098 869
- US-A1- 2001 019 201
- US-A1- 2019 202 393

## Description

### TECHNICAL FIELD

The present invention relates to a curtain airbag device that protects an occupant in the event of a vehicle side collision or rollover.

### BACKGROUND TECHNOLOGY

Curtain airbag devices are provided with bag-shaped curtain airbag cushions that expand and deploy with gas in the event of an emergency to restrain and protect occupants. Curtain airbag cushions must deploy along a side surface of a vehicle to cover all regions where the occupant's head and upper body may be impacted, even if the vehicle transitions from a side collision to a rollover.

The curtain airbag cushion is stored in an upper portion of the side surfaces in a vehicle cabin in a vehicle front-rear direction, not only between roof side rails but also between a front pillar positioned on a vehicle front side of the roof side rails and a front pillar garnish covering the front pillar from inside the vehicle. In order to enable curtain airbag cushions to be stored in such a limited storage space, curtain airbag cushions are usually installed in the upper portion of the side surfaces of the vehicle cabin in a rolled or folded state.

The curtain airbag cushion expands and deploys by pushing aside the roof trim covering the roof side rail, the garnishes on each pillar, and the like. In this case, for example, with the technology of Patent Document 1, a patch portion P3 is provided as an expansion inhibiting part in an upper portion of a pillar trim 6 of a B-pillar 3 in a curtain airbag KB. Patent Document 1 states that providing the patch portion P3 to inhibit expansion can prevent a large expansion pressure from being applied to the pillar trim 6, thereby preventing damage to the pillar trim 6.

### Prior Art Documents

### Patent Documents

Patent Document 1: Japanese Unexamined Patent Application 2016-199067
WO2017/163550

### SUMMARY OF THE INVENTION

As described above, a vehicle front side of a curtain airbag cushion is covered by a front pillar garnish, and pushes aside the front pillar garnish when expanding and deploying. At this time, the expansion pressure of the curtain airbag cushion tends to concentrate on an upper end portion of the front pillar garnish, which may cause damage to the front pillar garnish. If the front pillar garnish were to fall off, scatter, or the like, occupant safety could be compromised, so adequate preventive measures must be taken.

### Problem to be Solved by the Invention

In view of the foregoing, an objective of the present invention is to provide a curtain airbag device capable of preventing damage to a front pillar garnish when activated.

### Means for Solving the Problems

In order to solve the aforementioned problem, a typical configuration of the curtain airbag device according to the present invention comprises:
a curtain airbag cushion installed along a roof side rail from a front pillar in a vehicle cabin in a long storage form in a vehicle front-rear direction and concealed by a front pillar garnish and roof trim; and an inflator secured to the roof side rail in a partially inserted state in the curtain airbag cushion which supplies gas in the event of an emergency, wherein the curtain airbag cushion comprises: an expansion portion provided on a vehicle front side of the curtain airbag cushion and that expands and deploys upon receiving gas from the inflator; and a temporary stitched portion formed by stitching the expansion portion at a point positioned near an upper end portion of the front pillar garnish of the expansion portion which breaks when subjected to a prescribed force when the curtain airbag cushion is expanded and deployed, and the temporary stitched portion is formed so as to extend inclined below the vehicle front side from an upper edge of the expansion portion in a state in which the curtain airbag cushion is spread out on a flat surface.

With the above configuration, gas supplied from the inflator to the expansion portion is blocked by the temporary stitched portion before reaching the upper end portion of the front pillar garnish on the front side of the vehicle. Therefore, the expansion portion first expands and deploys while pushing the roof trim downward, and then expands and deploys toward the front pillar garnish while the temporary stitched portion is released due to expansion pressure. In other words, with this configuration, the force of the gas directed toward the upper end portion of the front pillar garnish is received by the temporary stitched portion, thereby preventing damage to the upper end portion of the front pillar garnish and providing a curtain airbag device that takes safety into account.

The aforementioned temporary stitched portion may be formed in a range from the upper edge of the expansion portion to above the lower edge of the expansion portion. The temporary stitched portion of this configuration allows the gas to be guided at once below the expansion portion and then to release the temporary stitched portion as expansion of the expansion portion progresses and allows the force of the gas on the front pillar garnish to be efficiently reduced.

The aforementioned temporary stitched portion may be formed in a range from the upper edge of the expansion portion to near the center of the expansion portion in an up-down direction. The configuration of the temporary stitched portion allows the force of gas toward the front pillar garnish to be efficiently reduced when the expansion portion expands.

The upper end of the temporary stitched portion above may be formed at a point on the upper edge of the expansion portion that is to the rear side of the vehicle from the upper end portion of the front pillar garnish. The configuration of the temporary stitched portion allows the force of gas toward the front pillar garnish to be efficiently reduced when the expansion portion expands.

The lower end of the temporary stitched portion above may be formed at a point on the expansion portion that is to the rear side of the vehicle from the upper end portion of the front pillar garnish. The configuration of the temporary stitched portion allows the force of gas toward the front pillar garnish to be efficiently reduced when the expansion portion expands.

The lower end of the temporary stitched portion above may be formed at a point on the expansion portion that is to the front side of the vehicle from the upper end portion of the front pillar garnish. The configuration of the temporary stitched portion allows the force of gas toward the front pillar garnish to be efficiently reduced when the expansion portion expands.

### Effect of the Invention

The present invention can provide a curtain airbag device capable of preventing damage to a front pillar garnish when activated.

### BRIEF DESCRIPTION OF THE DRAWINGS

FIG. 1 is a diagram that illustrates an overview of the curtain airbag device according to an embodiment of the present invention.
FIG. 2 is a diagram illustrating the curtain airbag cushion of FIG. 1(b) spread out on a flat surface.
FIG. 3 is an enlarged view of a vehicle front side of the curtain airbag cushion of FIG. 2.
FIG. 4 is a diagram illustrating a deployment behavior of the curtain airbag cushion of FIG. 3.
FIG. 5 is a diagram illustrating modified examples of the temporary stitched portion of FIG. 3.

### Mode for Carrying Out the Invention

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

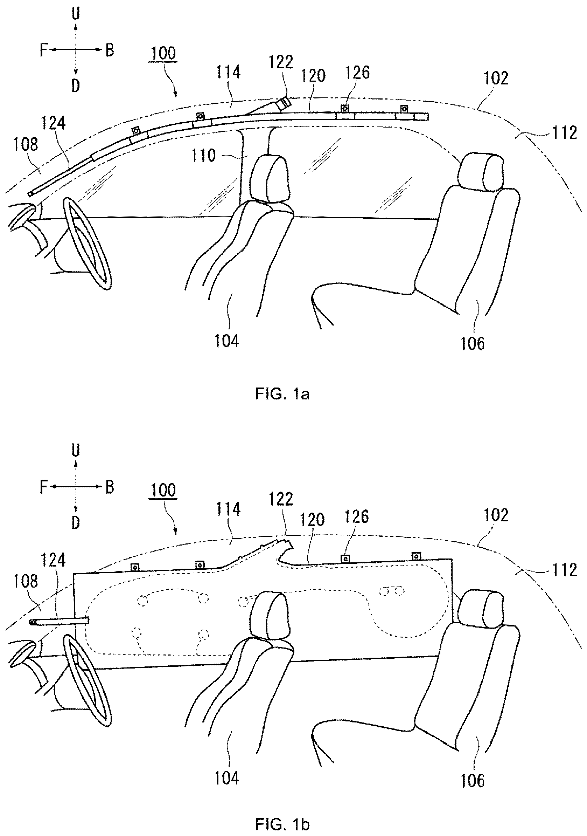

FIG. 1 is a diagram that illustrates an overview of the curtain airbag device 100 according to an embodiment of the present invention. FIG. 1(a) is a diagram illustrating a state before activation of the curtain airbag device 100. The curtain airbag device 100 illustrated in the drawing is for the right side of the vehicle, but a curtain airbag device 100 for the left side, which is omitted from the drawing, has the same symmetrical structure.

Hereinafter, regarding FIG. 1(a) and other diagrams, a vehicle front-rear direction is indicated by the symbols F (Front) and B (Back), left and right sides in a vehicle width direction are indicated by the symbols L (Left) and R (Right), and a vehicle up-down direction is indicated by the symbols U (Up) and D (Down). In particular, "upward" refers to a direction towards the head as viewed from an occupant properly seated on a seat, and "downward" refers to a direction towards the lower limbs as viewed from the occupant.

A vehicle 102 is assumed to be a two-row vehicle with a front row seat 104 and rear row seat 106 arranged from the front side of the vehicle. Side windows 105, 107 are installed on a side surface portion of the vehicle from the front side of the vehicle. Each side window has a plurality of pillars supporting a roof in the vehicle front-rear direction. From the front side of the vehicle, the pillars are referred to as a front pillar 108, a center pillar 110, and a rear pillar 112.

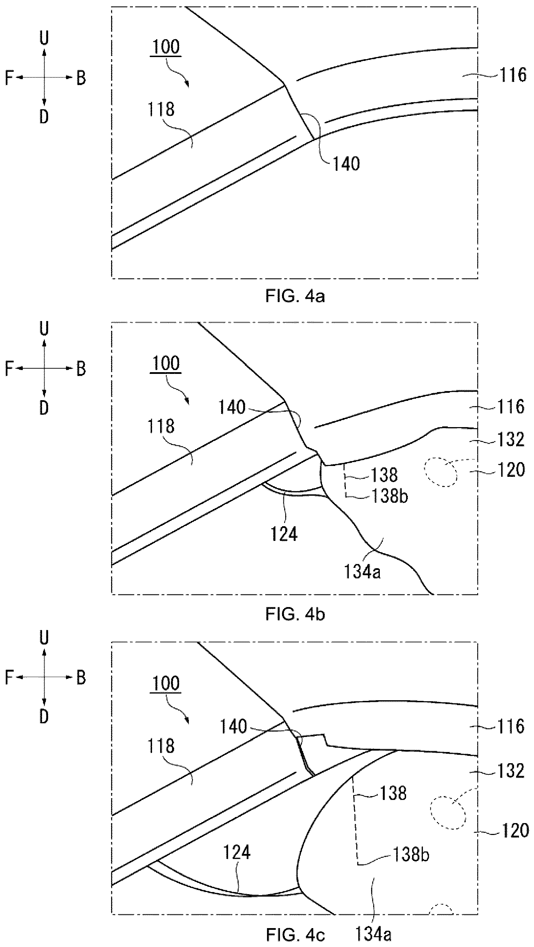

A roof side rail 114 is a member that forms an upper portion of a side surface in a vehicle cabin. The roof side rail 114 is covered by a roof trim 116 (see FIG. 4(a)), which covers the roof of the vehicle cabin. The front pillar 108 is covered with a front pillar garnish 118 made of resin inside the vehicle.

The curtain airbag cushion 120 of the curtain airbag device 100 prior to activation is in a long storage form in the vehicle front-rear direction by rolling or folding. The curtain airbag cushion 120 is attached from the front pillar 108 along the roof side rail 114. The curtain airbag cushion 120 prior to activation is concealed by the front pillar garnish 118 (see FIG. 4(a)) and the roof trim 116, and therefore is not visible to an occupant.

The curtain airbag device 100 is provided with an inflator 122, which is a gas generating device. The inflator 122 is a cylindrical cylinder type and is secured to the roof side rail 114 in a partially inserted state in the curtain airbag cushion 120.

FIG. 1(a) is a diagram illustrating a state after activation of the curtain airbag device 100. In the curtain airbag device 100, in the event of an emergency such as a side collision or the like, the pressure of gas supplied from the inflator 122 causes the curtain airbag cushion 120 to push aside the roof trim 116 (see FIG. 4(a)) and front pillar garnish 118 and expand and deploy to restrain the occupant.

The curtain airbag cushion 120 is widely expanded and deployed in the vehicle front-rear direction on a vehicle outer side of the front row seat 104 and the rear row seat 106. The various regions of the expansion portion of the curtain airbag cushion 120 are demarcated into small rooms, called chambers, depending on the gas flow, the occupant, and the structure of the seat, and the like.

The curtain airbag cushion 120 also has a strap 124. The strap 124 is a string-like member, a tip end portion of which is attached to the front pillar 108 and a rear end portion of which is attached to a front end of the curtain airbag cushion 120. The strap 124 is stored between the front pillar 108 and the front pillar garnish 118 (see FIG. 4(a)) prior to activation.

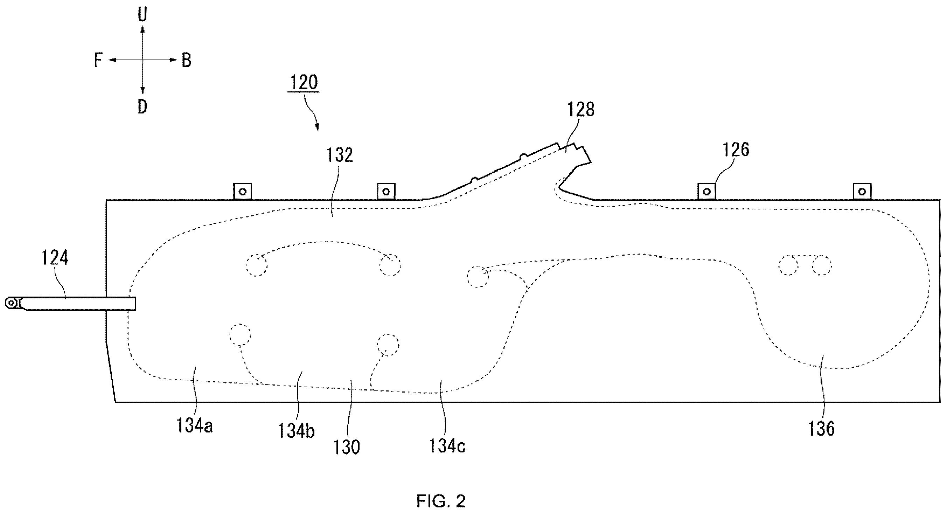

FIG. 2 is a diagram illustrating the curtain airbag cushion 120 of FIG. 1(b) spread out on a flat surface. Note that when the curtain airbag cushion 120 is placed on a flat surface, the side where the inflator 122 is installed is the "up" side and the opposite direction is the "down" side. This up-down direction corresponds to the up-down direction of the vehicle body when the curtain airbag cushion 120 is installed in the vehicle.

The curtain airbag cushion 120 is formed into a bag shape, for example, by stitching the base fabric forming a surface thereof on the front and rear or by spinning using one-piece woven (OPW) technology. The curtain airbag cushion 120 is secured to the roof side rail 114 via a plurality of tabs 126 provided on an upper edge. The upper edge also has an inflator insertion portion 128 into which the inflator 122 (see FIG. 1(b)) is inserted.

The expansion portion 130 of the curtain airbag cushion 120 is largely demarcated into a duct part 132 and a plurality of protective chambers (protective chamber 134a and the like). The duct part 132 is a gas communication passage extending from the inflator insertion portion 128 in the vehicle front-rear direction and forms an upper portion of the expansion portion 130.

The protective chambers are demarcated into protective chambers 134a to 134c, which mainly restrain an occupant in the front row seat 104, and a protective chamber 136, which mainly restrains an occupant in the rear row seats 106. Each protective chamber is supplied with gas from the upper duct part 132.

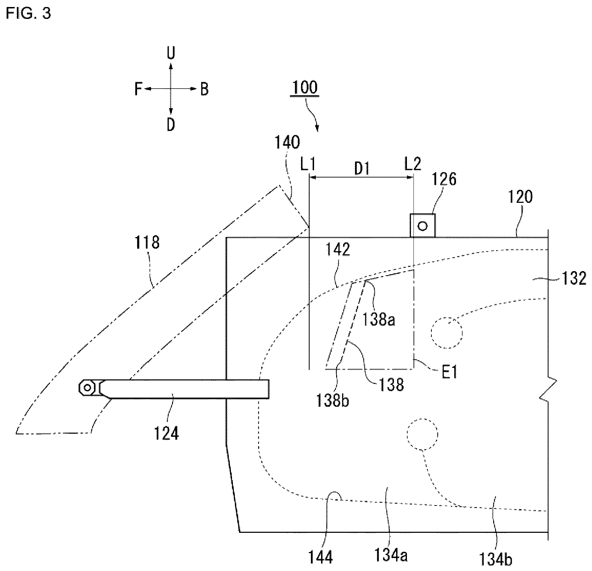

FIG. 3 is an enlarged view of the vehicle front side of the curtain airbag cushion 120 of FIG. 2. FIG. 3 illustrates the front pillar garnish 118 of FIG. 1(b) using dashed lines. The curtain airbag cushion 120 in the present embodiment has a temporary stitched portion 138 to prevent excess expansion pressure on the front pillar garnish 118.

The temporary stitched portion 138 is a stitching line that can be released by the force of the curtain airbag cushion 120 during expansion and deployment, and is provided at a point in the protective chamber 134a near the upper end portion 140 of the front pillar garnish 118 when the curtain airbag cushion 120 is expanded and deployed.

In the present embodiment, the temporary stitched portion 138 is provided on the vehicle front side in the duct part 132 that extends from the inflator 122 (see FIG. 2) to the front pillar 108, and on the upper portion of the protective chamber 134a provided foremost of the curtain airbag cushion 120. The temporary stitched portion 138 is formed by stitching the upper portion of the protective chamber 134a in the vehicle width direction with a stitching thread that breaks when subjected to a prescribed force.

The upper end 138a of the temporary stitched portion 138 is formed at a point of the upper edge 142 of the protective chamber 134a on the rear side of the vehicle to the vertical straight line L1 on a rear portion of the upper end portion 140 of the front pillar garnish 118 when the curtain airbag cushion 120 is spread out on a flat surface. Furthermore, the temporary stitched portion 138 is formed so as to extend inclined below the vehicle front side from the upper edge 142 of the duct part 132. At this time, a lower end 138b of the temporary stitched portion 138 is also formed at a point in the protective chamber 134a that is on the rear side of the vehicle to the upper end portion 140 of the front pillar garnish 118.

With the configuration above, the temporary stitched portion 138 is inclined below the vehicle front side, such that gas flowing through the duct part 132 toward the front pillar garnish 118 at the front side of the vehicle is guided at once downward along the vehicle front side along the temporary stitched portion 138.

FIG. 4 is a diagram illustrating a deployment behavior of the curtain airbag cushion 120 of FIG. 3. FIG. 4(a) illustrates a state before activation of the curtain airbag cushion 120. The upper end portion 140 of the front pillar garnish 118 is provided adjacent to the roof trim 116. From the front pillar garnish 118 to the front portion of the roof trim 116, the area from the strap 124 of the curtain airbag cushion 120 to the duct part 132 and near the protective chamber 134a is stored.

FIG. 4(b) illustrates a state when gas is supplied to the curtain airbag cushion 120 in FIG. 4(a). In the present embodiment, when gas is supplied from the inflator 122 (see FIG. 2) to the protective chamber 134a through the duct part 132, the gas is blocked by the temporary stitched portion 138 in front of the upper end portion 140 of the front pillar garnish 118. Therefore, the protective chamber 134a expands and deploys, pushing the roof trim 116 downward at once, instead of toward the front side of the vehicle.

FIG. 4(c) illustrates a state when gas is further supplied to the protective chamber 134a in FIG. 4(b). When the protective chamber 134a unrolls or the like and deploys downward, the temporary stitched portion 138 also fully deploys. Then, the expansion pressure from below is concentrated on the lower end 138b of the temporary stitched portion 138, such that the protective chamber 134a expands and deploys to the front pillar garnish 118 side while breaking the temporary stitched portion 138.

Thus, in the present embodiment, the force of the gas directed toward the upper end portion 140 of the front pillar garnish 118 is received by the temporary stitched portion 138, thereby preventing damage to the upper end portion 140 of the front pillar garnish 118. In particular, by preventing the front pillar garnish 118 from falling off and scattering fragments, it is possible to provide a curtain airbag device 100 with greater consideration for safety.

Each parameter of the temporary stitched portion 138 will be described below. First, forces applied to the temporary stitched portion 138 during expansion and deployment of the curtain airbag cushion 120 are considered. The temporary stitched portion 138 is provided within a range E1 of 16,025 mm² on the upper portion of the protective chamber 134a (see FIG. 3). The range E1 is set within a range from the vertical straight line L1 on the rear portion of the upper end portion 140 of the front pillar garnish 118 to a vertical straight line L2 separated about a distance D1 = 140 mm to the rear side. The time required to hold the temporary stitched portion 138 was limited to 12 ms, as it was observed that rolling in the range E1 was resolved in 12 ms from the start of the activation of the inflator 122. The measurement showed that the internal pressure of the protective chamber 134a at 12 ms was 72.7 kPa.

From the numerical values described above, the force applied to the temporary stitched portion 138 was found to be 1165 [N] at the time of 12 ms described above, according to the following formula. The formula is: pressure [N/m²] = magnitude of force [N] / area subjected to force [mm²]: 72,700 [N/m²] x 16,025 [mm²] = 1165 [N].

Next, the strength [N] of the temporary stitched portion 138 is considered. The tensile strength of the stitching thread used to form the temporary stitched portion 138 was 33 ± 5 [N]. Furthermore, the length of the temporary stitched portion 138 was set at 150 mm. The seam interval (stitching pitch) was 2.5 ± 0.3 mm. At this time, the number of stitches (stitch count) was length/pitch: 150/2.5=60 [count].

From the numerical values above, the strength of the temporary stitched portion [N] was found to be 33 [N] x 60 [stitches] = 1980 [N]. Of these, there are tolerances in the tensile strength of the stitching thread and the stitching pitch, and therefore, the lower tolerance limit of the strength of the temporary stitched portion [N] (lower limit of stitching strength) is 28 [N] x 54 [stitches] = 1512 [N]. Note that the air permeability (thread tension) of the temporary stitched portion 138 is controlled in a range of 500 ± 100 [mm/s] for upper thread and 220 ± 50 for lower thread.

The temporary stitched portion 138 (1512 [N]) set above was found to be able to withstand the force (1165 [N]) received from the rear side at 12 ms. In other words, it was confirmed that the temporary stitched portion 138 with the parameters above would be able to hold the stitching suitably and prevent the deployment force of the protective chamber 134a from being applied to the upper end portion 140 of the front pillar garnish 118 until the time point of 12 ms when rolling of the protective chamber 134a, as illustrated in FIG. 4(c), is released.

At the time point when the protective chamber 134a unrolls, i.e., after 12 ms, a portion of the protective chamber 134a below the lower end 138b of the temporary stitched portion 138 also expands. This causes a development force to be applied from below on the lower end 138b of the temporary stitched portion 138. Therefore, in the temporary stitched portion 138, the load from below is concentrated on the stitching thread (33 [N]) at the lower end 138b, and breaking of the portion begins.

The above confirms the validity of the temporary stitched portion 138 above, in which the stitching is suitably held until 12 ms from the start of the activation of the inflator 122 and then released after 12 ms to expand and deploy the entire protective chamber 134a. The temporary stitched portion 138 can prevent the force of gas from the duct part 132 from directly hitting the front pillar garnish 118 and prevents the front pillar garnish 118 from falling off or scattering.

### Modified Example

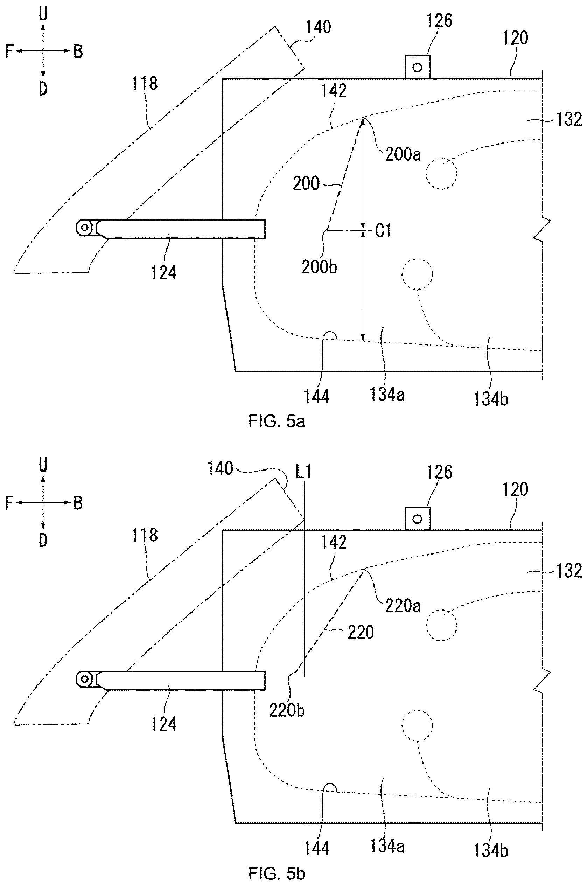

Modified examples of each of the above-described components are described below. In FIG. 5, the same codes are attached to the same structural elements as described above, and a description of the aforementioned structural elements is omitted. In the following description, components having the same name as a component already described are assumed to have the same function unless otherwise specified, even if marked with a different sign.

FIG. 5 is a diagram illustrating modified examples of the temporary stitched portion of FIG. 3. FIG. 5(a) is a diagram illustrating a temporary stitched portion 200 of a first modified example. The temporary stitched portion 200 is longer than the temporary stitched portion 138 in FIG. 3 and is formed, for example, from the upper edge 142 of the protective chamber 134a to the vicinity of a center C1 of the protective chamber 134a in the up-down direction. By varying the length as in the temporary stitched portion 200, it is possible to efficiently reduce the force of gas toward the front pillar garnish 118 in accordance with the timing of the expansion and deployment of the protective chamber 134a.

FIG. 5(b) is a diagram illustrating a temporary stitched portion 220 of a second modified example. The temporary stitched portion 220 is more inclined toward the front side of the vehicle than temporary stitched portion 138 in FIG. 3. For example, a lower end 220b of the temporary stitched portion 220 is also formed at a point in the protective chamber 134a that is on the front side of the vehicle to the vertical straight line L1 extending from a rear side of the upper end portion 140 of the front pillar garnish. By changing the angle as in the temporary stitched portion 220, the gas flow in the protective chamber 134a can be changed according to the shape and dimensions of the protective chamber 134a and the front pillar garnish 118, which also allows the force of gas towards the front pillar garnish 118 to be efficiently suppressed.

The temporary stitched portions 138, 200, and 220 described above are all formed with the upper ends 138a, 200a, and 220b at the upper edge 142 of the protective chamber 134a, which is an expansion portion, and the lower ends 138b, 200b, and 220b therefrom to above the lower edge 144 of the protective chamber 134a. In other words, a gas flow path is secured below the temporary stitched portions 138, 200, and 220, and the lower ends 138b, 200b, and 220b concentrate the deployment force from below. Therefore, the temporary stitched portions 138, 200, 220 are configured to suppress the force of the gas directed toward the front pillar garnish 118 and to be released as the expansion of the protective chamber 134a progresses, thereby not affecting the occupant restraining force.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person with ordinary skill in the art can conceive various changed examples or modified examples within the scope described in the scope of the claims, which is understood to naturally belong to the technical scope of the present invention.

### Industrial Applicability

The present invention can be used in a curtain airbag device that protects an occupant in the event of a vehicle side collision or rollover.

### Description of Codes

100... Curtain airbag device, 102... Vehicle, 104... Front row seat, 105, 107... Side window, 106... Rear row seat, 108... Front pillar, 110... Center pillar, 112... Rear pillar, 114... Roof side rail, 116... Roof trim, 118... Front pillar garnish, 120... Curtain airbag cushion, 122... Inflator, 124... Strap, 126... Tab, 128... Inflator insertion portion, 130... Expansion portion, 132... Duct part, 134a... Protective chamber, 136... Protective chamber, 138... Temporary stitched portion, 138a... Upper end, 138b... Lower end, 140... Upper end portion, 142... Upper edge, 144... Lower edge, C1... Center of protective chamber, E1... Range, 200... Temporary stitched portion of first modified example, 200a... Upper end, 200b... Lower end, 220... Temporary stitched portion, 220a... Upper end, 220b... Lower end

## Claims

1. A curtain airbag device, comprising:
a curtain airbag cushion installed along a roof side rail from a front pillar in a vehicle cabin in a long storage form in a vehicle front-rear direction and concealed by a front pillar garnish and roof trim; and
an inflator secured to the roof side rail in a partially inserted state in the curtain airbag cushion which supplies gas in the event of an emergency, wherein
the curtain airbag cushion comprises:
an expansion portion provided on a vehicle front side of the curtain airbag cushion and that expands and deploys upon receiving gas from the inflator; and
a temporary stitched portion formed by stitching the expansion portion at a point positioned near an upper end portion of the front pillar garnish of the expansion portion which breaks when subjected to a prescribed force when the curtain airbag cushion is expanded and deployed, and
the temporary stitched portion is formed so as to extend inclined below the vehicle front side from an upper edge of the expansion portion in a state in which the curtain airbag cushion is spread out on a flat surface.

2. The curtain airbag device according to claim 1, wherein the temporary stitched portion is formed in a range from the upper edge of the expansion portion to above the lower edge of the expansion portion.

3. The curtain airbag device according to claim 1 or 2, wherein the temporary stitched portion is formed in a range from the upper edge of the expansion portion to near the center of the expansion portion in an up-down direction.

4. The curtain airbag device according to any one of claims 1 to 3, wherein the upper end of the temporary stitched portion is formed at a point of the upper edge of the expansion portion that is to the rear side of the vehicle from the upper end portion of the front pillar garnish.

5. The curtain airbag device according to any one of claims 1 to 4, wherein the lower end of the temporary stitched portion is formed at a point of the expansion portion that is to the rear side of the vehicle from the upper end portion of the front pillar garnish.

6. The curtain airbag device according to any one of claims 1 to 4, wherein the lower end of the temporary stitched portion is formed at a point of the expansion portion that is to the front side of the vehicle from the upper end portion of the front pillar garnish.

## Patentansprüche

1. Vorhangairbag-Vorrichtung, umfassend:
ein Vorhangairbag-Kissen, das entlang einer dachseitigen Schiene von einer Vordersäule in einer Fahrzeugkabine in einer langen Aufbewahrungsform in einer Fahrzeug-Vorder-Heck-Richtung eingebaut und durch eine Vordersäulenverkleidung und eine Dachverkleidung verborgen ist; und
einen Gasgenerator, der an der dachseitigen Schiene befestigt ist, in einem teilweise eingesetzten Zustand in dem Vorhangairbag-Kissen, wobei er in einem Notfall Gas liefert, wobei
das Vorhangairbag-Kissen umfasst:
einen Expansionsabschnitt, der auf einer Fahrzeugvorderseite des Vorhangairbag-Kissens bereitgestellt ist und der sich expandiert und entfaltet, wenn er Gas von dem Gasgenerator bekommt; und
einen temporären Nahtabschnitt, der durch Nähen des Expansionsabschnitts an einem Punkt, der nahe einem oberen Endabschnitts der Vordersäulenverkleidung des Expansionsabschnitts positioniert ist, ausgebildet ist, und der bricht, wenn er einer vorgeschriebenen Kraft ausgesetzt wird, wenn das Vorhangairbag-Kissen expandiert und entfaltet wird, und
der temporäre Nahtabschnitt ausgebildet ist, um sich in einem Zustand, in dem das Vorhangairbag-Kissen auf einer flachen Oberfläche ausgebreitet ist, von einer oberen Kante des Expansionsabschnitts schräg unter die Fahrzeugvorderseite zu erstrecken.

2. Vorhangairbag-Vorrichtung nach Anspruch 1, wobei der temporäre Nahtabschnitt in einem Bereich von der oberen Kante des Expansionsabschnitts bis über die untere Kante des Expansionsabschnitts ausgebildet ist.

3. Vorhangairbag-Vorrichtung nach Anspruch 1 oder 2, wobei der temporäre Nahtabschnitt in einem Bereich von der oberen Kante des Expansionsabschnitts bis nahe dem Zentrum des Expansionsabschnitts in einer Oben-Unten-Richtung ausgebildet ist.

4. Vorhangairbag-Vorrichtung nach einem der Ansprüche 1 bis 3, wobei das obere Ende des temporären Nahtabschnitts an einem Punkt der oberen Kante des Expansionsabschnitts, der sich von dem oberen Endabschnitt der Vordersäulenverkleidung an der Rückseite des Fahrzeugs befindet, ausgebildet ist.

5. Vorhangairbag-Vorrichtung nach einem der Ansprüche 1 bis 4, wobei das untere Ende des temporären Nahtabschnitts an einem Punkt des Expansionsabschnitts, der sich von dem oberen Endabschnitt der Vordersäulenverkleidung an der Rückseite des Fahrzeugs befindet, ausgebildet ist.

6. Vorhangairbag-Vorrichtung nach einem der Ansprüche 1 bis 4, wobei das untere Ende des temporären Nahtabschnitts an einem Punkt des Expansionsabschnitts, der sich von dem oberen Endabschnitt der Vordersäulenverkleidung an der Vorderseite des Fahrzeugs befindet, ausgebildet ist.

## Revendications

1. Dispositif de rideau gonflable, comprenant :
un coussin de rideau gonflable installé le long d'un brancard de pavillon à partir d'un montant avant dans une cabine de véhicule sous une forme de stockage longue dans une direction avant-arrière de véhicule et dissimulé par une garniture de montant avant et un habillage de toit ; et
un gonfleur fixé au brancard de pavillon dans un état partiellement inséré dans le coussin de rideau gonflable qui fournit du gaz en cas d'urgence, dans lequel
le coussin de rideau gonflable comprend :
une partie de dilatation prévue sur un côté avant de véhicule du coussin de rideau gonflable et qui se dilate et se déploie lorsqu'elle reçoit du gaz à partir du gonfleur ; et
une partie cousue temporaire formée par couture de la partie de dilatation au niveau d'un point positionné près d'une partie d'extrémité supérieure de la garniture de montant avant de la partie de dilatation qui se rompt lorsqu'elle est soumise à une force prescrite lorsque le coussin de rideau gonflable se dilate et se déploie, et
la partie cousue temporaire est formée de manière à s'étendre de manière inclinée sous le côté avant de véhicule à partir d'un bord supérieur de la partie de dilatation dans un état dans lequel le coussin de rideau gonflable est étalé sur une surface plane.

2. Dispositif de rideau gonflable selon la revendication 1, dans lequel la partie cousue temporaire est formée dans une plage allant du bord supérieur de la partie de dilatation jusqu'au-dessus du bord inférieur de la partie de dilatation.

3. Dispositif de rideau gonflable selon la revendication 1 ou 2, dans lequel la partie cousue temporaire est formée dans une plage allant du bord supérieur de la partie de dilatation jusqu'à proximité du centre de la partie de dilatation dans une direction haut-bas.

4. Dispositif de rideau gonflable selon l'une quelconque des revendications 1 à 3, dans lequel l'extrémité supérieure de la partie cousue temporaire est formée au niveau d'un point du bord supérieur de la partie de dilatation qui est vers le côté arrière du véhicule à partir de la partie d'extrémité supérieure de la garniture de montant avant.

5. Dispositif de rideau gonflable selon l'une quelconque des revendications 1 à 4, dans lequel l'extrémité inférieure de la partie cousue temporaire est formée au niveau d'un point de la partie de dilatation qui est vers le côté arrière du véhicule à partir de la partie d'extrémité supérieure de la garniture de montant avant.

6. Dispositif de rideau gonflable selon l'une quelconque des revendications 1 à 4, dans lequel l'extrémité inférieure de la partie cousue temporaire est formée au niveau d'un point de la partie de dilatation qui est vers le côté avant du véhicule à partir de la partie d'extrémité supérieure de la garniture de montant avant.
